# EUROPEAN PATENT APPLICATION

(11) **EP 3 378 885 A1**
(43) Date of publication of application: **26.09.2018**
(21) Application number: 16866736.8
(22) Date of filing: 11.11.2016
(51) Int. Cl.: C08G 75/14

(54) **METHOD FOR PRODUCING HIGH MOLECULAR WEIGHT ORGANIC SUBSTANCES CONTAINING A DISULPHIDE GROUP**

(30) Priority: 18.11.2015 RU 2015149500
(71) Applicant: Obschestvo S Ogranichennoi Otvetstvennostyu "Stimul Grupp", Kaluzhskaya obl., 249032 (RU)
(72) Inventor: EFREMOV, Vasily Vitalievich, Lytkarino 140080 (RU); LOSEV, Vladimir Ivanovich, Obninsk 249035 (RU); LOSEV, Sergei Vladimirovich, Obninsk 249035 (RU); STOLYAROV, Sergey Vladimirovich, Obninsk Kaluzhskaya obl., 249032 (RU); SHELOBKOV, Alexey Anatolievich, Obninsk Kaluzhskaya obl., 249032 (RU)
(74) Representative: Vitina, Maruta
(86) International application number: PCT/RU2016/000767
(87) International publication number: WO 2017/086836

(57) **Abstract**

The invention relates to a method for producing high molecular weight organic substances containing a disulphide group, and also to the high molecular weight organic substances obtained using the aforementioned method, which can be used as multifunctional additives in polymers (heat stabilisers, photostabilisers, etc.).

## Description

The invention relates to the chemistry of high molecular weight organosulfur organic compounds containing a disulfide group in their structure and is intended for an industrial method for the preparation of finished forms of polydisulfides of amino acids, hydroxy acids, phenols, as well as aromatic and aliphatic amines and diamines.

### BACKGROUND OF THE INVENTION

Methods for the preparation of polydisulfides based on aromatic organic compounds are known (SU 1781248, 1990, C3, RU 2337927, 2006, C2 and RU 2488605, 2011, C2). The closest in terms of technical essence are patents RU 2337927 issued on October 11, 2006, and RU 2488605 issued on March 14, 2011. with the same names "Organic compounds containing disulfide groups as stabilizers of oxidative processes in thermoplastic polymers and method for their preparation".

The general disadvantages of these processes for the preparation of polydisulfides are:
- limiting of organic compounds to aromatic series only,
- absence of general chemical formulas for the resulting polydisulfides,
- use of inefficient methods of separating the solvent from the product obtained,
- impossibility of industrial application of the obtained semifinished products of polydisulfides of aromatic series,
- uncertainty of the drying process of the product obtained,
- incompleteness of the technological process for the preparation of polydisulfides.

The task solved by the claimed objects is to improve the known methods and substances to eliminate their drawbacks with the achievement of a technical result with respect to increasing the stabilizing ability, in particular thermooxidative degradation.

Said technical result is achieved by the provided method for the preparation of high molecular weight organic substances containing a disulfide group, as multifunctional polymer additives, said method comprising a set of five technological steps, during which the following is performed:
- verification of the original ingredients for compliance with technical specifications (TS),
- synthesis of substances,
- separation of the solvent from the resulting solution,
- drying of the substance obtained,
- grinding, screen sizing the substance obtained, testing for compliance with TS for given substance, issuing a certificate and packaging in shipping container.

This technical result is also provided with the aid of high molecular weight organic substances of the general formulas: 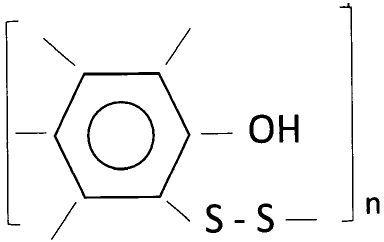 and 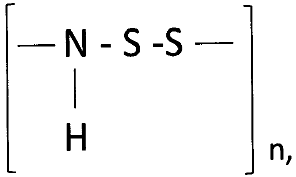 where n = 4-25,
obtained by the claimed method, as multifunctional polymer additives.

### DETAILED DESCRIPTION AND EMBODIMENTS OF THE INVENTION

It would be beneficial to describe in more detail the provided industrial method for the preparation of polydisulfides not only of aromatic series, but also of other organic compounds, characterized in the completeness of the technological process, and to describe its 5 technological steps and 7 examples of its practical implementation.

**Step 1** includes the process of preparing the ingredients and verification their compliance with the technical documentation.

**Step 2** begins with the adding of the corresponding organic compound (in an amount of m moles) to a chemical reactor equipped with a reflux condenser, a temperature meter, an overhead stirrer, a loading hatch for the ingredients, and a bottom drain. Then the inert solvent ethyl acetate is added, a stirrer is turned on, which is turned off only after the synthesis process is completed. After complete dissolution of the corresponding organic compound, the solution is cooled to a temperature of +10 °C and sulfur monochloride (S₂Cl₂) (also m moles) is added dropwise for 20-40 minutes. After the end of the addition of sulfur monochloride (S₂Cl₂), the solution is heated to +20 °C for 30 minutes, and then the solution is heated to +75 °C. The evolved gaseous HCl is bubbled through the water in the bottle and then through a water-water vacuum pump into the sewage system. The end of the process of substitution of a hydrogen atom with a disulfide group is characterized by the complete cessation of HCl release (no bubbling) in the bottle.

**Step 3.** After the synthesis is completed, the solution is poured into a suitable flask through the lower tap to conduct the process of separating the solvent from the resulting polydisulfide by film condensation and reduction at a negative pressure and a constant temperature in a rotary evaporator equipped with a direct condenser, receiving flasks for the solvent to be separated, a vacuum system and a spinner flask heating system. The solvent separation process ends after complete elimination of the solvent evolution.

**Step 4.** After separation of the solvent, the product in enameled dishes is placed in a vacuum drying oven equipped with a direct condenser for condensing off-gases with a receiving flask, for drying the product at a temperature of +150 °C under vacuum of 20 mm Hg.

The drying process ends after the evolution of off-gases is ceased.

**Step 5.** The dried and cooled product is ground in a rotary grinding plant at 18,000 rpm. The ground product is discharged to the grading sifter for the powder obtained with sieves from 1 to 100 µm. The product with large particle size is again loaded into the apparatus to obtain the desired particle size. A sample is taken from the powder obtained for testing the compliance with TS for given product.

Based on the tests, a certificate is issued for the finished product form, and then it is packaged in a shipping container.

**Example 1.** Parent organic compound hydroquinone (m moles) is added to the chemical reactor at a rate of 1 L - 1 mol, and then solvent ethyl acetate is added in a 4:1 ratio. Mechanical stirrer is turned on. After complete dissolution of the starting material (product), the solution is cooled to +10 °C and sulfur monochloride (m moles) is slowly poured into it. The reaction solution is then heated to +20 °C for 30 minutes and heated to +75 °C. A substitution reaction begins at a temperature of +20 °C. 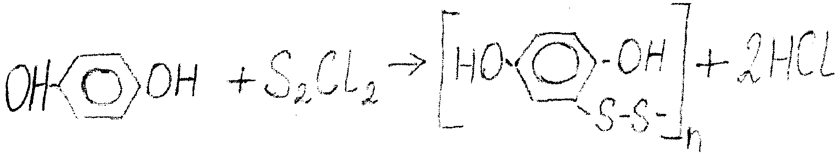 where n = 12÷18.

The yield of hydroquinone polydisulfide is 85-90%. The results of the analysis are presented in the table.

**Elementary composition, % by weight**

| | C | H | S |
|---|---|---|---|
| Found | 43.41 | 2.43 | 36.43 |
| Calculated | 41.86 | 2.33 | 37.20 |

**Infrared spectrum, cm⁻¹**

| -S-S- | C=S | Benzene ring | OH |
|---|---|---|---|
| 510 weak | 730 weak | 1470-1570 | 3200÷3400 wide |

Tₘ = 130÷132 °C.
Molecular weight - 2645 (cryoscopy in biphenyl)

**Example 2.** Parent organic compound biuret (m moles) is added to the chemical reactor at a rate of 1 mol - 1L of reactor volume. Then inert solvent ethyl acetate is added in a 4:1 ratio. Mechanical stirrer is turned on. After the complete dissolution of the starting material (product), the solution is cooled to +10 °C and sulfur monochloride (m moles) is slowly poured into it. The reaction solution is then heated to +20 °C for 30 minutes and heated to +75 °C. A substitution reaction begins at a temperature of +20 °C.

**H2NCONHCONH2 + S2Cl2 => [H2NCONHCONH-S-S-]n + 2HCl,**

where n = 6-12.

The yield of biuret polydisulfide is 85%. The results of the analysis are presented in the table.

**Elementary composition, % by weight**

| | C | H | S |
|---|---|---|---|
| Found | 14.72 | 1.71 | 38.23 |
| Calculated | 14.84 | 1.81 | 38.37 |

**Infrared spectrum, cm⁻¹**

| -S-S- | -C-N- | NH | CO |
|---|---|---|---|
| 515 | 1320 | 1530 | 1730 |

Tₘ = 131÷133 °C.
Molecular weight - 1480 (cryoscopy in biphenyl)

**Example 3.** Parent organic compound pyrocatechol (m moles) is added to the chemical reactor at a rate of 1 L - 1 mol, then solvent ethyl acetate is added in a 4:1 ratio. Mechanical stirrer is turned on. After the complete dissolution of the starting material (product), the solution is cooled to +10 °C and sulfur monochloride (m moles) is slowly poured into it. The reaction solution is then heated to +20 °C for 30 minutes and heated to +75 °C. A substitution reaction begins at a temperature of +20 °C. 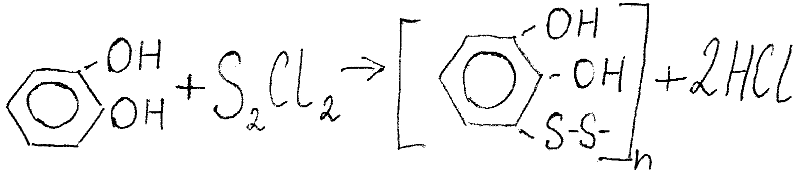 where n = 15÷20.

The yield of pyrocatechol polydisulfide is 85-90%. The results of the analysis are presented in the table.

**Elementary composition, % by weight**

| | C | H | S |
|---|---|---|---|
| Found | 42.23 | 2.31 | 37.22 |
| Calculated | 41.86 | 2.33 | 37.20 |

**Infrared spectrum, cm⁻¹**

| -S-S- | C=S | Benzene ring | OH |
|---|---|---|---|
| 510 weak | 730 weak | 1470, 1570 | 3200÷3400 wide |

Tₘ = 150÷152 °C.
Molecular weight - 2500 (cryoscopy in biphenyl)

**Example 4.** Parent organic compound resorcinol (m moles) is added to the chemical reactor at a rate of 1 L - 1 mol, then solvent ethyl acetate is added in a 4:1 ratio. Mechanical stirrer is turned on. After the complete dissolution of the starting material (product), the solution is cooled to +10 °C and sulfur monochloride (m moles) is slowly poured into it. The reaction solution is then heated to +20 °C for 30 minutes and heated to +75 °C. A substitution reaction begins at a temperature of +20 °C. 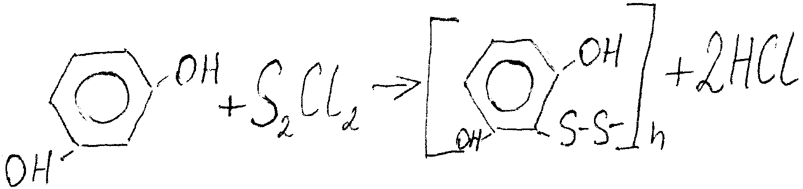 where n = 10÷16.

The yield of resorcinol polydisulfide is 85-90%. The results of the analysis are presented in the table.

**Elementary composition, % by weight**

| | C | H | S |
|---|---|---|---|
| Found | 43.59 | 2.54 | 36.22 |
| Calculated | 41.86 | 2.33 | 37.20 |

**Infrared spectrum, cm⁻¹**

| -S-S- | C-S | Benzene ring | OH |
|---|---|---|---|
| 530 weak | 690 weak | 1610 | 3200÷3400 wide |

Tₘ = 208÷210 °C.
Molecular weight - 2035 (cryoscopy in biphenyl)

**Example 5.** Parent organic compound maleic acid hydrazide of formula **H2N-HN-CO-CH=CH-CO-HN-NH2** (m moles) is added to the chemical reactor at a rate of 1 L - 1 mol, then solvent ethyl acetate is added in a 4:1 ratio. Mechanical stirrer is turned on. After the complete dissolution of the starting material (product), the solution is cooled to +10 °C and sulfur monochloride (m moles) is slowly poured into it. The reaction solution is then heated to +20 °C for 30 minutes and heated to +75 °C. A substitution reaction according to the following scheme begins at a temperature of +20 °C:

**H2N-HN-CO-CH=CH-CO-NH-NH2** + **S2Cl2 => [-HN-HN-CO-CH=CH-CO-NH-NH-S-S-]n + 2HCl,**

where n = 10-20.

The yield of hydroquinone polydisulfide is 85-90%. The results of the analysis are presented in the table.

**Elementary composition, % by weight**

| | C | H | S |
|---|---|---|---|
| Found | 23.53 | 1.98 | 31.27 |
| Calculated | 22.98 | 1.87 | 32.01 |

**Infrared spectrum, cm⁻¹**

| -S-S- | C-N | N-H | CO |
|---|---|---|---|
| 510 | 1320 | 1525 | 1730 |

Tₘ = 167÷170 °C.
Molecular weight - 2800 (cryoscopy in biphenyl)

Tests of maleic acid hydrazide polydisulfide as light stabilizer of polyethylene were carried out on cut blades made of 0.5 mm film, pressed at a temperature of 160-180 °C for 15 minutes, from the web obtained on heated rollers at a temperature of 110-120 °C with the addition of maleic acid hydrazide polydisulfide. The blades are exposed to ultraviolet radiation in the 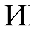 Π 1-3 device for 100 hours. The results of the tests are given in the table.

| **Item No.** | **Light stabilizer, % by weight** | **Relative elongation** | |
|---|---|---|---|
| | **Maleic acid hydrazide polydisulfide** | **Before irradiation** | **After irradiation** |
| 1 | 0.2 | 443 | 175 |
| 2 | 0.3 | 432 | 235 |
| 3 | 0.5 | 430 | 430 |

| | **Benzon OA** | | |
|---|---|---|---|
| | 0.5 | 420 | 130 |

In the presence of maleic acid hydrazide polydisulfide in an amount of 0.2-0.5% by weight the relative elongation at break after light ageing is 1.35-3.3 times higher than in the presence of an industrial light stabilizer benzon OA.

**Example 6.** Parent organic compound resorcinol (m moles) is added to the chemical reactor at a rate of 1 L - 1 mol, then solvent ethyl acetate is added in a 4:1 ratio. Mechanical stirrer is turned on. After the complete dissolution of the starting material (product), the solution is cooled to +10 °C and sulfur monochloride (m moles) is slowly poured into it. The reaction solution is then heated to +20 °C for 30 minutes and heated to +75 °C. A substitution reaction begins at a temperature of +20 °C. 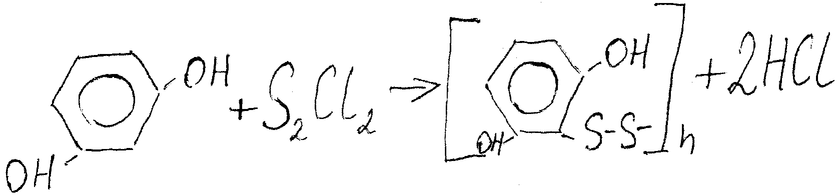 where n = 10÷16.

The yield of resorcinol polydisulfide is 85-90%. The results of the analysis are presented in the table.

**Elementary composition, % by weight**

| | C | H | S |
|---|---|---|---|
| Found | 43.59 | 2.54 | 36.22 |
| Calculated | 41.86 | 2.33 | 37.20 |

**Infrared spectrum, cm⁻¹**

| -S-S- | C-S | Benzene ring | OH |
|---|---|---|---|
| 530 weak | 690 weak | 1610 | 3200÷3400 wide |

Tₘ = 208÷210 °C.
Molecular weight - 2035 (cryoscopy in biphenyl)

Evaluation of the efficiency of resorcinol polydisulfide as a stabilizer of thermooxidative degradation of polypropylene was carried out according to the following procedure: a predetermined amount of polypropylene is placed on electrically heated microrollers at a temperature of 175-185 °C, and a predetermined amount of resorcinol polydisulfide is placed with stirring. Stirring is continued for 15-20 minutes with repeated clipping. Weighed portions of polypropylene in an amount of 1 g containing resorcinol polydisulfide are placed in a tube with a ground-glass joint of a thermooxidation plant where they are heated to a temperature of +200 °C and oxygen pressure of 350 mm Hg for 6 hours. During the thermooxidative degradation of polypropylene, the oxygen pressure drop over a certain time interval (ΔPo2) and induction period (In) are determined. The test results are presented in the table.

| Stabilizer,% by weight of PP | Induction period, In, min | Oxygen pressure drop ΔPo2 in mm Hg per 1 g of PP composition | | | | | |
|---|---|---|---|---|---|---|---|
| | | Time, hours | | | | | |
| | | 1 | 2 | 3 | 4 | 5 | 6 |
| Resorcinol polydisulfide 0.1 | 15 | 10 | 20 | 33 | 48 | 57 | 62 |
| 0.2 | 45 | 1 | 4 | 7 | 9 | 10 | 11 |
| 0.4 | 30 | 2 | 7 | 11 | 12 | 13 | 15 |
| Phenozan 23 0.4 | 30 | 2 | 7 | 10 | 12 | 13 | 15 |

At a concentration of resorcinol polydisulfide 0.2% by weight induction period of thermooxidation of polypropylene is 1.5 times higher, and the rate of oxygen uptake is 25-40% less than in the presence of phenozan 23 in an amount of 0.4% by weight.

**Example 7.** Parent organic compound pyrocatechol (m moles) is added to the chemical reactor at a rate of 1 L - 1 mol, then solvent ethyl acetate is added in a 4:1 ratio. Mechanical stirrer is turned on. After the complete dissolution of the starting material (product), the solution is cooled to +10 °C and sulfur monochloride (m moles) is slowly poured into it. The reaction solution is then heated to +20 °C for 30 minutes and heated to +75 °C. A substitution reaction begins at a temperature of +20 °C. 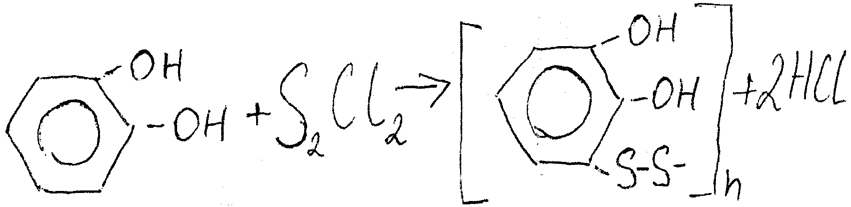 where n = 15÷20.

The yield of pyrocatechol polydisulfide is 85-90%. The results of the analysis are presented in the table.

**Elementary composition, % by weight**

| | C | H | S |
|---|---|---|---|
| Found | 42.23 | 2.31 | 37.22 |
| Calculated | 41.86 | 2.33 | 37.20 |

**Infrared spectrum, cm⁻¹**

| -S-S- | C=S | Benzene ring | OH |
|---|---|---|---|
| 510 weak | 730 weak | 1470, 1570 | 3200÷3400 wide |

Tₘ = 150÷152 °C.
Molecular weight - 2500 (cryoscopy in biphenyl)

Tests of pyrocatechol polydisulfide as an antioxidant were carried out by the method of differential scanning calorimetry (DSC). The analysis of the data obtained is presented in the table.

| **Composition** | **T of the beginning of oxidation, °C** | **Induction period** |
|---|---|---|
| **1** | **2** | **3** |
| 0.25% PCH | 294 | More than 3 hours |
| 0.25% Irganox 1010 | 260 | - |
| 0.4% PCH | 304 | More than 3 hours |
| 1% PCH | 313 | More than 3 hours |
| 1% Irganox 1010 | 281 | - |

It is evident from the results presented that pyrocatechol polydisulfide has the greatest stabilizing ability. Throughout the range of the concentrations investigated of antioxidant (AO) in the polymer matrix, the temperature of the onset of oxidation of compositions containing PCH exceeds such for Irganox 1010 by more than 30 °C.

It should be noted that the application has adhered the principle of unity of the invention, since the method and substances provided have the same purpose, serve common goal, when taken together they ensure the achievement of the same technical result, and are also interconnected by a single inventive concept, characterized by the claims. At the same time, the concept of legal protection is based on the fact that the inseparability and interconnectedness of the provided objects, as well as the permissible variability of the implementation of individual essential features or their sets, predetermine, in particular the unconventional nature of the wording of certain features. For example, the features of the method are characterized by the implementation of 5 steps, and for the substances - by means of structural formulas reflecting their structure.

### INDUSTRIAL APPLICABILITY AND ACHIEVEMENT OF THE TECHNICAL RESULT

Therefore, as follows from the foregoing, the features indicated in the claims of the invention are essential and purposefully interrelated to each other with the formation of their stable set, which is necessary and sufficient to obtain said technical result. The achieved technical result, as shown by the experimental data, can be realized only by an interconnected set of all the essential features of the claimed objects, reflected in the claims, at any their values covered by the claimed claims and satisfying the claimed features. The claimed essential distinctive features were obtained on the basis of creative processing of the results of the conducted studies and experiments, analysis and generalization of them and known from published data sources interconnected by the conditions of achievement of the technical result specified in the application, and also using inventive intuition.

The method and substances provided do not contain features, which can not be implemented using known technologies and devices. Compliance with the criterion of "industrial applicability" of the provided objects is also proved by the absence in the claimed claims of any features that are practically difficult to implement on an industrial scale.

## Claims

1. A method for the preparation of high molecular weight organic substances containing a disulfide group as multifunctional polymer additives, comprising a set of five technological steps, during which the following is performed:
- verification of the original ingredients for compliance with technical specifications,
- synthesis of substances,
- separation of the solvent from the resulting solution,
- drying of the substance obtained,
- grinding, screen sizing the substance obtained, testing for compliance with technical specifications for given substance, issuing a certificate and packaging in shipping container.

2. High molecular weight organic substances of the general formula: 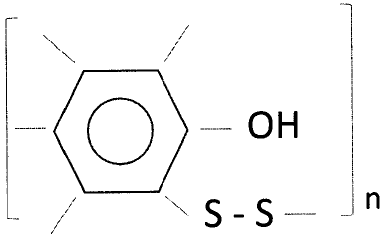 where n = 4-25,
obtained by the method of claim 1, as multifunctional polymer additives.

3. High molecular weight organic substances of the general formula: 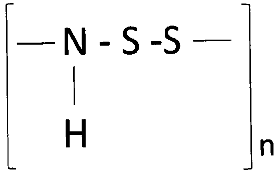 where n = 4-25,
obtained by the method of claim 1, as multifunctional polymer additives.
